# EUROPEAN PATENT APPLICATION

(11) **EP 1 632 197 A1**
(43) Date of publication of application: **08.03.2006**
(21) Application number: 05108003.4
(22) Date of filing: 01.09.2005
(51) Int. Cl.: A61C 15/04, A61C 15/00

(54) **Interdental cleaning device**

(30) Priority: 03.09.2004 NL 1026962
(71) Applicant: Ridam Beheer B.V., 3454 PJ De Meern (NL)
(72) Inventor: Stranders, Luas Frans, 3454 PJ, De Meern (NL)
(74) Representative: Van den Heuvel, Henricus Theodorus

(57) **Abstract**

Dental plaque on the teeth and molars is a general cause of inflammation of the gums and tooth decay, which can result in the occurrence of cavities in the teeth and molars. Particularly in the interdental spaces between the teeth and molars it is generally difficult to remove the formed dental plaque by means of a conventional toothbrush. The invention relates to an interdental cleaning device. The invention also relates to a handle for use in such an interdental cleaning device. The invention further relates to a holder for interdental cleaning means for use in such a cleaning device.

## Description

The invention relates to an interdental cleaning device. The invention also relates to a handle for use in such an interdental cleaning device. The invention further relates to a holder for interdental cleaning means for use in such a cleaning device. In addition, the invention relates to a method for manufacturing a floss holder.

Dental plaque on the teeth and molars is a general cause of inflammation of the gums and tooth decay, which can result in the occurrence of cavities in the teeth and molars. Particularly in the interdental spaces between the teeth and molars it is generally difficult to remove the formed dental plaque by means of a conventional toothbrush. In order to clean the interdental spaces between the tooth elements use is usually made, depending on the size of the interdental spaces, of dental sticks, interdental (spiral) brushes and floss, which is usually referred to as floss-silk or floss thread. The European patent EP 0 610 227 describes an interdental cleaning device comprising a handle and a floss holder connected releasably to the handle. A tongue portion forming part of the floss holder can herein be arranged laterally in a groove arranged in the handle, whereby a lateral coupling can be realized between the handle and the floss holder. This coupling is further stabilized by two projections arranged on the floss holder adapted for co-action with the handle for the purpose of fixing the relative orientation between the handle and the floss holder, particularly during use in mesio-distal and buccolingual direction, and in the direction of the gum intersections. Although the coupling between the handle and the floss holder is usually reliable and stable, a significant drawback of the known cleaning device is that the mutual lateral coupling between the handle and the floss holder is per se relatively difficult to realize because the groove must first be positioned along, and thus laterally relative to, the floss holder, whereafter the floss holder and the groove must be displaced toward each other in substantially linear manner to enable the reliable snap coupling to be realized. Apart from the fact that such a coupling can only be realized two-handed, older people and disabled persons usually have difficulty performing this operation, and thereby with mutual coupling of the handle and the floss holder.

The invention has for its object, while retaining the advantage of the prior art, to provide an improved interdental cleaning device with which the different components of the cleaning device can be coupled releasably to each other in relatively simple and user-friendly manner.

The invention provides for this purpose an interdental cleaning device of the type stated in the preamble, comprising a handle provided with coupling means, and a disposable holder for interdental cleaning means, wherein the holder is provided with mating means, which coupling means and mating means are adapted for mutual releasable coupling of the handle and the holder by means of a snap connection, wherein the mating means comprise at least one passage opening for receiving at least a part of the coupling means with clamping fit such that the relative orientation of the handle and the holder is substantially fixed. By inserting at least a part of the coupling means into a passage opening arranged in the holder a relatively sturdy, stable and reliable releasable coupling can be generated in relatively simple and user-friendly manner. The passage opening of the mating means is herein preferably accessible from a direction which encloses a coupling angle with a plane defined by at least a part of the holder. An important advantage of this particular accessibility of the passage opening is that the coupling can also be brought about by disabled and older people in that the handle and the holder do not first have to be placed alongside each other to enable said coupling to be realized. The releasable coupling can already be realized here in only one operation by displacing the handle in substantially axial direction in the direction of the holder and thus snapping the handle fixedly into the passage opening. The coupling angle is more preferably substantially perpendicular, whereby the mutual coupling between the handle and the holder can even be realized with one hand by having the holder support on a surface, such as for instance a supply container for one or more holders, whereby the handle can be coupled with one hand to the holder.

The interdental cleaning means can be of very diverse nature and are not limited to floss. Any cleaning element adapted for cleaning the interdental spaces can in fact be applied in the cleaning device according to the invention, wherein the particularly advantageous manner of coupling the handle to the holder is the main feature. In a preferred embodiment, the cleaning means comprise floss thread, at least one interdental brush and/or at least one dental stick. The floss thread is herein usually referred to as floss-silk or as floss and is adapted to clean the relatively narrow intermediate spaces. The interdental brush is formed by a usually spiral-shaped interdental brush adapted to clean the wider interdental spaces. As alternative to the interdental brush, a dental stick can also be applied which can be coupled releasably to the handle via the mating means and the coupling means.

The holder will usually take a relatively flat form so as to prevent undesirable intake of excessive volume, and to thereby minimize the volume. A holder can thus be obtained of a relatively handy size, while the amount of material required to manufacture such a holder can be minimized. The handle herein preferably extends substantially perpendicularly relative to a plane defined by at least a part of the holder, whereby a relatively favourable mutual orientation between the handle and the holder can be obtained for a user for the purpose of enabling intensive and substantially full cleaning of the interdental spaces.

In a preferred embodiment, the holder comprises a plurality of jaw parts mutually coupled by the mating means, wherein floss thread is arranged between the jaw parts. The floss thread can herein form one non-releasable whole with the jaw parts, but can also be attached to the jaw parts by means of for instance adhesive. The floss thread is preferably connected to, or is at least close to, free outer ends of the jaw parts.

In preference the passage opening is bounded substantially wholly by the holder, or at least the mating means. The contact surface between the coupling means and the mating means can be maximized by having the passage opening bounded substantially wholly by the holder or at least the mating means, which generally enhances the stability of the coupling. The passage opening can herein be formed by a recess arranged in the holder.

In a preferred embodiment, the mating means comprise a plurality of mutually separated passage openings, wherein each passage opening is adapted to receive a part of the coupling means. The use of a plurality of passage openings, which passage openings can also be referred to as receiving spaces, for the purpose of receiving at least a part of the coupling means has the significant advantage that the transmission of force between the handle and the holder can be distributed over an enlarged surface area, whereby a relatively strong and stable snap connection can be realized between the handle and the holder. It is particularly during use of the interdental cleaning device according to the invention that a user will benefit from the realized relatively strong and stable snap connection. An additional advantage of applying a plurality of passage openings is that the handle and the holder are directly aligned during making of the snap connection, whereby the relative orientation between the handle and the holder will be substantially fixed. The mating means more preferably comprise a plurality of passage openings mutually separated by at least one bridge. The relative orientation between the handle and the holder can generally be fixed in improved manner by applying a plurality of passage openings, wherein the bridge in fact functions as an intermediate stabilizing member. In addition, the bridge can also serve to mutually connect a plurality of holder parts. In a particular preferred embodiment, the bridge is provided with a tongue protruding relative to the plane defined by at least a part of the holder, this tongue being adapted to be received in a cavity enclosed by the coupling means. The tongue functions here as additional stabilizing member for mutual coupling between the handle and the holder, wherein in particular laterally exerted loads on the cleaning device can be absorbed relatively well, or at least more than adequately. The coupling means preferably comprise a plurality of protruding clamping members, wherein each passage opening is adapted to receive at least one clamping member. Each passage opening and each associated clamping member is herein adapted to realize a snap connection. Since a plurality of passage openings and a plurality of clamping members are preferably applied in the interdental cleaning device according to the invention, a plurality of snap connections are thus realized (simultaneously) by the cleaning device, whereby the total snap connection will be relatively durable and, above all, reliable during use of the cleaning device.

The coupling means are preferably provided with at least one radially protruding element, and the mating means are provided with at least one recessed mating element, wherein the protruding element and the recessed mating element are adapted for mutual co-action while forming the snap connection. The radially protruding element of the coupling means is generally formed by a flange extending along a whole peripheral side of the holder. The mating element will here generally be formed by a recessed ring adapted for co-action with the flange. The ring will usually be positioned here in the passage opening of the mating means. The snap connection can thus be formed during axial displacement of the handle in the direction of the holder, whereby the relative orientation of the holder and the cleaning means coupled thereto is substantially fixed relative to the handle, particularly during movement of the cleaning device during use in mesio-distal and buccolingual direction, and in the direction of the gum intersections or a combination of at least two of these directions. Such a reliable fixation is usually also advantageous when placing in an interdental space or removing therefrom at least a part of the cleaning means, since in that case relatively high pressure loads can usually be exerted on the holder which have to be absorbed by the holder. The cleaning device according to the invention can hereby be applied relatively effectively and safely in all operating directions. The distal-medial direction herein designates the direction over the side of a tooth or molar along a substantially horizontal plane, the buccolingual direction designates the interproximal movement in a substantially horizontal plane, while the movement in the direction of the gum intersections refers to the flossing movement in a vertical plane.

In order to prevent relative (axial) rotation of the handle relative to the holder, and vice versa, the passage opening and a part of the coupling means preferably adapted to be received in the passage opening take a cross-sectional form that is other than circular. The cross-section of the two components here can however take an elliptical or angular form. It is however also possible to envisage providing the passage opening with at least one recess adapted to receive a protrusion forming part of the coupling means in order to prevent relative rotation of the handle and the holder.

The coupling means can be of very diverse design and adapted to be at least partially received in the passage opening. A remaining part of the coupling means can herein be adapted for a different engagement on the holder, wherein the coupling means can for instance engage (partly) round the holder. Form a structural viewpoint however, it is advantageous that the at least one passage opening of the mating means is adapted to substantially fully receive the coupling means. A structurally relatively simple cleaning device can thus be provided with which a stable and reliable releasable coupling can be provided.

The interdental cleaning device is preferably manufactured substantially from plastic. Plastic is generally relatively inexpensive and relatively easy to process. In a particular preferred embodiment, the coupling means are manufactured from a plastic other than the plastic from which the mating means are made. An improved reliable coupling between the handle and the holder can generally be achieved by having different plastics engage on each other. The coupling means (and the handle) can for instance be manufactured here from polypropylene (PP), while the mating means can for instance be manufactured from acrylonitrile butadiene styrene (ABS).

The invention also relates to a handle for use in an interdental cleaning device according to the invention.

The invention further relates to a holder for interdental cleaning means for use in an interdental cleaning device according to the invention.

In addition, the invention relates to a method for manufacturing a floss holder according to the invention, comprising the steps of: A) causing mutual co-action of a plurality of form-retaining mould parts, B) filling a mould cavity enclosed by the form-retaining mould parts with plastic brought into liquid state, C) curing the plastic with forming of the floss holder, and D) removing the formed floss holder from the mould cavity. The method according to the invention has the advantage that the floss holder - provided with the passage opening and the mating means for partial forming of the snap connection - can be manufactured in relatively inexpensive and simple manner using form-retaining mould parts, these being mould parts in which no generally complex, moving components are arranged. It is not necessary for the floss holder to be already provided with floss during manufacture. This is because it is also possible to envisage the floss only being tensioned in or on the floss holder just prior to use by the user. In a preferred embodiment however, the method also comprises step E), comprising of tensioning the floss between the form-retaining mould parts, prior to causing mutual co-action of the plurality of form-retaining mould parts as according to step A), wherein the floss is clamped between the form-retaining mould parts while step A) is performed. In this manner the floss can already be arranged in advantageous manner in the plastic floss holder during the injection moulding process, wherein the tension of the floss can already be optimized beforehand prior to use. Tensioning of the floss as according to step E) herein preferably takes place in relatively intensive manner, wherein the floss is tensioned in relatively taut manner in order to facilitate and improve later cleaning of the interdental space. The relatively taut tensioning of the floss also represents a specific and significant advantage compared to the floss holder known from EP 0 610 227, where the floss can never and may never be tensioned in optimum manner so as to provide the option of being able to realize the snap connection by temporarily deforming the floss holder, wherein the floss has to be temporarily pulled tighter without thread breakage occurring. The floss holder known from the prior art is therefore necessarily always provided with relatively loosely tightened floss, and this adversely affects the cleaning action of the floss holder.

The invention will be elucidated on the basis of the non-limitative exemplary embodiments shown in the following figures. Herein:
figure 1 shows a perspective view of an interdental cleaning device according to the invention,
figure 2a shows a perspective view of a handle for use in the cleaning device of figure 1,
figure 2b shows a front view of another floss holder for use in the cleaning device of figure 1,
figure 2c shows a top view of the floss holder of figure 2a,
figure 3 is a front view of another interdental cleaning device according to the invention,
figure 4 shows a cross-section of yet another interdental cleaning device according to the invention,
figure 5 shows a cross-section of an alternative interdental cleaning device according to the invention,
figure 6a shows a perspective view of an alternative handle for use in a cleaning device according to the invention, and
figure 6b shows a front view of an alternative holder for interdental cleaning means for use in a cleaning device according to the invention.

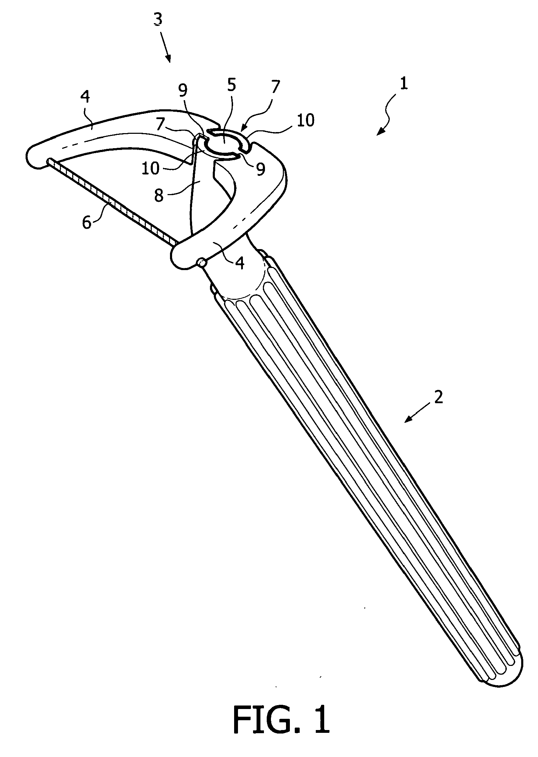

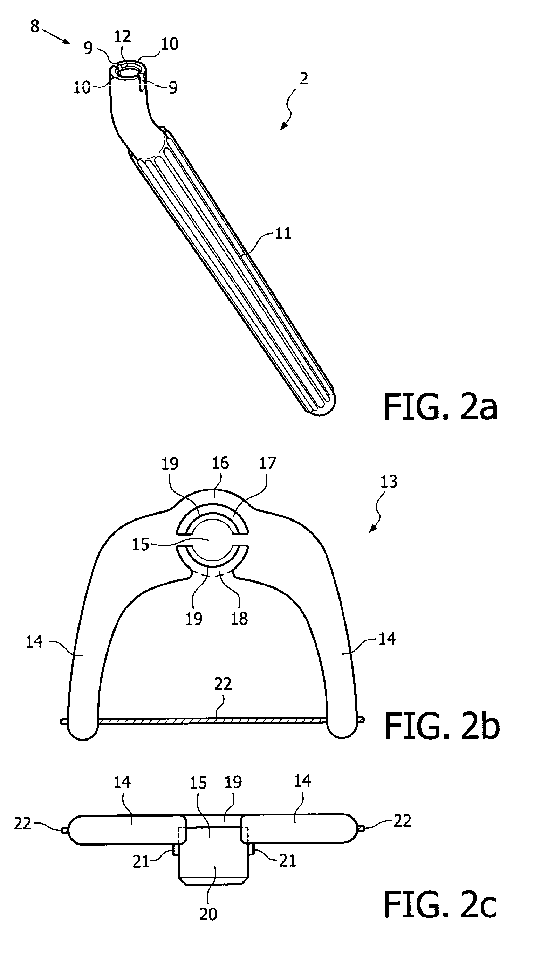

Figure 1 shows a perspective view of an interdental cleaning device 1 according to the invention. Cleaning device 1 comprises a handle 2 and a floss holder 3 connected releasably to the handle. Floss holder 3 is adapted for once-only use, or at least adapted to be used several times, and comprises two jaw parts 4 which are mutually connected by an intermediate bridge 5. Tensioned between the free outer ends of jaw parts 4 is a floss 6, using which interdental spaces can be cleaned. Jaw parts 4 and bridge 5 are designed here such that jaw parts 4 and bridge 5 enclose between them two passage openings 7 for receiving a part of handle 2, in particular the coupling means 8 forming part of handle 1. As shown, coupling means 8 comprise two clamping members 10 which are in the form of a segment of a circle and are separated by a slot 9 and which are arranged with clamping fit in the (not fully enclosed) passage openings 7, wherein bridge 5 is arranged with clamping fit in slot 9. The mutual coupling between handle 2 and floss holder 3 is herein stabilized inter alia by a snap connection formed by mutual co-action of a radially inward protruding edge forming part of coupling means 8 (see figure 2a) and a recessed edge forming part of floss holder 3 (see figures 2b and 2c). Clamping members 10 enclose a cavity (see figure 2a) in which is received a protruding tongue connected to bridge 5 (see figures 2b and 2c) in order to further stabilize the mutual coupling between handle 2 and floss holder 3 such that the relative orientation between handle 2 and this floss holder 3 is substantially fixed, particularly during movement of cleaning device 1 during use in buccolingual, gingivo-incisal and mesio-distal directions. The mutual coupling between handle 2 and floss holder 3 is particularly advantageous because the passage openings 7 for clamping members 10 are accessible from an advantageous direction perpendicular to a plane defined by floss holder 3, whereby a user can effect the coupling relatively easily and even with one hand.

Figure 2a shows a perspective view of handle 2 for use in the cleaning device of figure 1. Handle 2 is herein provided with a profiled surface 11 to enable optimum grip and thereby control over handle 2. The outer end of handle 2 in which coupling means 8 are arranged takes a slightly curved form in order to enable optimal ergonomics and convenience of use of cleaning device 1. As shown, coupling means 8 comprise two clamping members 10 in the form of a segment of a circle which are mutually separated by a slot 9, wherein the free end of each clamping member is provided with a radially inward protruding edge 12 adapted to realize a reliable snap connection to floss holder 3. Handle 2 is preferably manufactured from plastic, in particular polypropylene. Coupling means 8 take a mirror-symmetrical form, whereby floss holder 3 or any other cleaning element can be attached in two orientation positions to handle 2, wherein the user can realize an optimum orientation between handle 2 and the cleaning element. Particularly in the case the cleaning element is formed by an interdental brush, such a change in orientation between handle 2 and the interdental brush can be especially advantageous in facilitating and optimizing access provision to the interdental spaces for the user.

Figure 2b shows a front view of another floss holder 13 for use in the cleaning device of figure 1. Floss holder 13 is structurally very similar to the floss holder 3 shown in figure 1. Floss holder 13 comprises two jaw parts 14 mutually connected by means of an intermediate bridge 15 and an upper bridge 16. Intermediate bridge 15 and upper bridge 16 herein enclose a first receiving space 17 for one of the clamping members 10, while intermediate bridge 15 and the two jaw parts 14 define between them a second receiving space 18 for receiving the other clamping member 10 of coupling means 8 of handle 2. Figure 2b shows clearly that intermediate bridge 15 is provided with two edges 18 arranged in recessed manner, wherein each edge 19 is directed toward one of the two receiving spaces 17, 18. Edges 19 are adapted for co-action with for instance the flanges or protruding edges 12 of the handle 2 shown in figure 2a while forming a reliable snap connection.

Figure 2c shows a top view of the floss holder 13 of figure 2a, wherein upper bridge 16 is omitted from the figure for the sake of clarity. Clearly shown here is that intermediate bridge 15 protrudes on one side relative to the plane defined by jaw parts 14, wherein intermediate bridge 15 is provided with a central tongue 20 and two wing elements 21 positioned on either side of tongue 20. Tongue 20 is adapted here to be received with clamping fit in a cavity enclosed by clamping member 10, while wing elements 21 are adapted to be received with clamping fit in the slot 9 located between clamping members 10, so as to enable a stable and reliable coupling to be effected between handle 2 and floss holder 13. A floss 22 is generally already accommodated in jaw parts 14 during the production process, in particular an injection moulding process. Using the present configuration of floss holder 13 according to the invention, the injection moulding of floss holder 13, including the recessed edges 19, can take place relatively quickly, easily and cheaply in a single process step, wherein only a form-retaining mould (without moving components) is required.

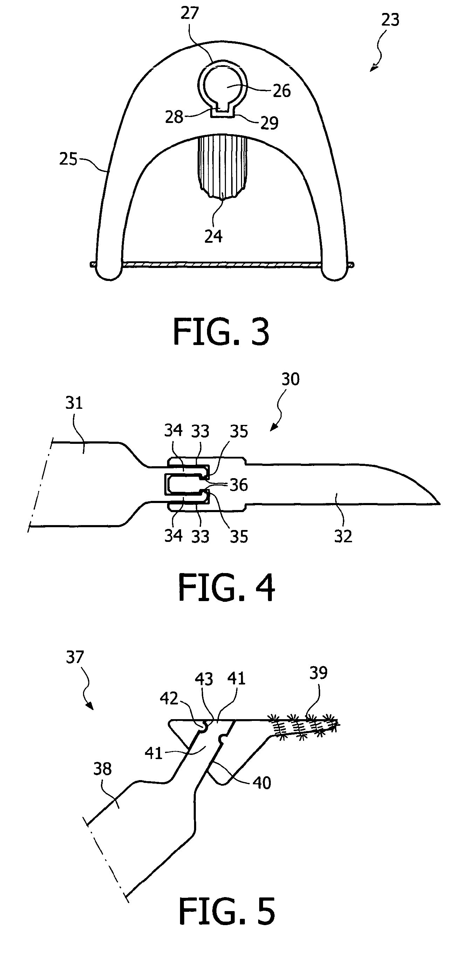

Figure 3 shows a front view of another interdental cleaning device 23 according to the invention. Cleaning device 23 herein comprises a handle 24 which is coupled in releasable yet reliable manner to a floss holder 25. Handle 24 is provided for this purpose with a coupling element 26 which, with clamping fit and by means of a snap connection, is accommodated in a passage opening 27 of substantially identical form which is arranged in floss holder 25 and which functions as mating element. In cross-section the coupling element 26 and the mating element 27 are herein provided in a partial circle with respectively a protrusion 28 and a recess 29 to prevent relative rotation between handle 24 and floss holder 25, particularly during use of cleaning device 23.

Figure 4 shows a cross-section of yet another interdental cleaning device 30 according to the invention. Cleaning device 30 herein comprises a handle 31 and a disposable dental stick 32 coupled releasably to handle 31. Dental stick 32 is herein provided with a double receiving space 33 for two fingers 34 located on a narrowed outer end of handle 31. Each finger 34 is herein provided with an inward protruding flange 35 adapted for co-action with a slot 36 arranged in each receiving space 33 for the purpose of enabling a snap connection between handle 31 and dental stick 32. A relatively stable, reliable coupling can be obtained by means of the combination of the socket connection and the snap connection between handle 31 and dental stick 32, wherein both coupling and uncoupling of the two components 31, 32 can be effected relatively easily.

Figure 5 shows a cross-section of an alternative interdental cleaning device 37 according to the invention. Cleaning device 37 comprises a handle 38 and an interdental spiral-shaped brush 39 coupled releasably to handle 38. Brush 39 comprises a passage 40 for a coupling part 41 of handle 38, wherein a protruding flange 42 arranged in passage 40 is adapted for co-action with a recessed edge 43 arranged in coupling part 41 for the purpose of being able to effect a reliable snap connection between handle 38 and brush 39. Passage 40 and coupling part 41 preferably take a cross-sectional form that is other than circular so as to prevent relative rotation between the two components 40, 41. In the shown exemplary embodiment handle 38 and brush 39 enclose an angle in order to enable optimal ergonomics and convenience of use of cleaning device 37.

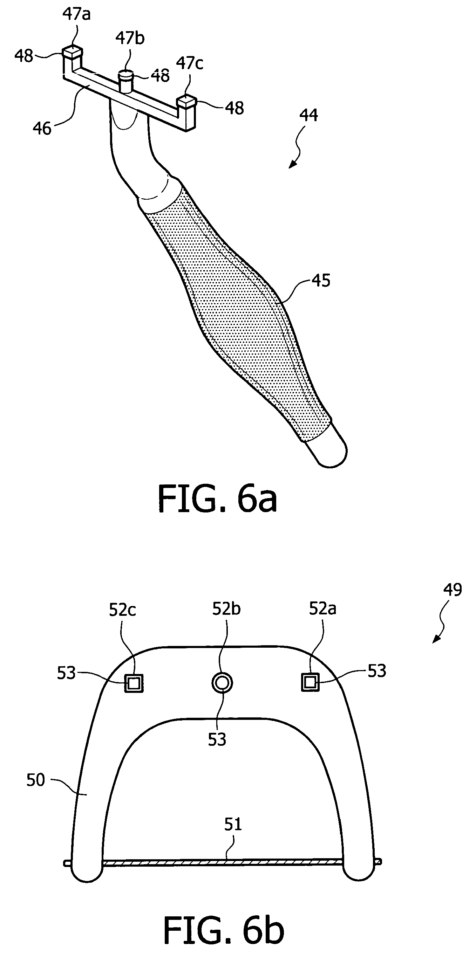

Figure 6a shows a perspective view of an alternative handle 44 for use in a cleaning device according to the invention. Handle 44 comprises for this purpose an ergonomically formed grip element 45 for a user. The grip element is herein manufactured from elastomer with anti-slip characteristics so that the user-friendliness of handle 44 can be increased. Handle 44 also comprises a fork-like outer end 46 provided with three protruding clamping members 47a, 47b, 47c. Clamping members 47a, 47b, 47c are adapted to be received with clamping fit in receiving spaces arranged in a holder for interdental cleaning means (see for instance figure 6b). Here the outer clamping members 47a, 47c are of angular cross-section, while the central clamping member 47b has a substantially circular cross-section. All the clamping members 47a, 47b, 47c are provided with a (slightly) thickened end edge 48 to enable a snap connection to the holder to be realized.

Figure 6b shows a front view of an alternative holder 49 for interdental cleaning means for use in a cleaning device according to the invention. Holder 49 is adapted particularly for co-action with the handle 44 shown in figure 6a. Holder 49 comprises a jaw-shaped body 50, between the outer ends of which a floss 51 is tensioned. Jaw-shaped body 50 is provided with three receiving spaces 52a, 52b, 52c for receiving the respective clamping members 47a, 47b, 47c of handle 44. As shown, each receiving space 52a, 52b, 52c is provided with a widened end edge 53 adapted for co-action with the thickened end edge 48 of the respective clamping members 47a, 47b, 47c for the purpose of realizing a stable snap connection between handle 44 and holder 49.

It will be apparent that the invention is not limited to the exemplary embodiments shown and described here, but that within the scope of the appended claims numerous variants are possible which will be self-evident to the skilled person in this field.

## Claims

1. Interdental cleaning device, comprising:
- a handle provided with coupling means, and
- a disposable holder for interdental cleaning means, wherein the holder is provided with mating means,
which coupling means and mating means are adapted for mutual releasable coupling of the handle and the holder by means of a snap connection, wherein the mating means comprise at least one passage opening for receiving at least a part of the coupling means with clamping fit such that the relative orientation of the handle and the holder is substantially fixed.

2. Interdental cleaning device as claimed in claim 1, **characterized in that** the passage opening of the mating means is accessible from a direction which encloses a coupling angle with a plane defined by at least a part of the holder.

3. Interdental cleaning device as claimed in claim 2, **characterized in that** the coupling angle is substantially perpendicular.

4. Interdental cleaning device as claimed in any of the foregoing claims, **characterized in that** the handle extends substantially perpendicularly relative to a plane defined by at least a part of the holder.

5. Interdental cleaning device as claimed in any of the foregoing claims, **characterized in that** the cleaning means comprise floss thread, at least one interdental brush and/or at least one dental stick.

6. Interdental cleaning device as claimed in any of the foregoing claims, **characterized in that** the holder comprises a plurality of jaw parts mutually coupled by the mating means, wherein floss thread is arranged between the jaw parts.

7. Interdental cleaning device as claimed in any of the foregoing claims, **characterized in that** the passage opening is bounded substantially wholly by the holder.

8. Interdental cleaning device as claimed in any of the foregoing claims, **characterized in that** the mating means comprise a plurality of mutually separated passage openings, wherein each passage opening is adapted to receive a part of the coupling means.

9. Interdental cleaning device as claimed in claim 8, **characterized in that** at least two passage openings are mutually separated by a bridge.

10. Interdental cleaning device as claimed in claim 9, **characterized in that** the bridge is provided with a tongue protruding relative to the plane defined by at least a part of the holder, this tongue being adapted to be received in a cavity enclosed by the coupling means.

11. Interdental cleaning device as claimed in any of the claims 8-10, **characterized in that** the coupling means comprise a plurality of protruding clamping members, wherein each passage opening is adapted to receive at least one clamping member.

12. Interdental cleaning device as claimed in any of the foregoing claims, **characterized in that** the coupling means are provided with at least one radially protruding element, and that the mating means are provided with at least one recessed mating element, wherein the protruding element and the recessed mating element are adapted for mutual co-action while forming the snap connection.

13. Interdental cleaning device as claimed in any of the foregoing claims, **characterized in that** the passage opening and a part of the coupling means adapted to be received in the passage opening take a cross-sectional form that is other than circular.

14. Interdental cleaning device as claimed in any of the foregoing claims, **characterized in that** the at least one passage opening of the mating means is adapted to substantially fully receive the coupling means.

15. Interdental cleaning device as claimed in any of the foregoing claims, **characterized in that** the interdental cleaning device is manufactured substantially from plastic.

16. Interdental cleaning device as claimed in claim 15, **characterized in that** the coupling means are manufactured from a plastic other than the plastic from which the mating means are made.

17. Handle for use in an interdental cleaning device as claimed in any of the claims 1-16.

18. Holder for interdental cleaning means for use in an interdental cleaning device as claimed in any of the claims 1-16.
